# EUROPEAN PATENT SPECIFICATION

(11) **EP 3 493 220 B1**
(45) Date of publication and mention of the grant of the patent: **08.07.2020**
(21) Application number: 17204433.1
(22) Date of filing: 29.11.2017
(51) Int. Cl.: H01B 1/12, C08L 65/00, H01B 1/24, C08L 97/00, C08L 97/02

(54) **PARTICLES COMPRISING LIGNOSULFONATE AND AN ELECTRON CONDUCTING POLYMER**
PARTIKEL MIT LIGNINSULFONAT UND ELEKTRONENLEITENDES POLYMER
PARTICULES COMPRENANT DU LIGNOSULFONATE ET UN POLYMÈRE CONDUCTEUR D'ÉLECTRONS

(43) Date of publication of application: 05.06.2019
(73) Proprietor: RISE Acreo AB, 164 25 Kista (SE)
(72) Inventor: CRISPIN, Xavier, 610 20 KIMSTAD (SE); BERGGREN, Magnus, 602 18 NORRKÖPING (SE); GABRIELSSON, Roger, 601 74 NORRKÖPING (SE); JIAO, Fei, 602 21 NORRKÖPING (SE)
(74) Representative: AWA Sweden AB

(56) References cited:
- CN-A- 102 516 784
- ABDELLAH MALTI ET AL: "An Organic Mixed Ion-Electron Conductor for Power Electronics", ADVANCED SCIENCE, vol. 3, no. 2, 2 December 2015 (2015-12-02), page 1500305, XP055468880, ISSN: 2198-3844, DOI: 10.1002/advs.201500305
- F. N. AJJAN ET AL: "High performance PEDOT/lignin biopolymer composites for electrochemical supercapacitors", JOURNAL OF MATERIALS CHEMISTRY A: MATERIALS FOR ENERGY AND SUSTAINABILITY, vol. 4, no. 5, 1 January 2016 (2016-01-01) , pages 1838-1847, XP055468884, GB ISSN: 2050-7488, DOI: 10.1039/C5TA10096H
- S. ADMASSIE ET AL: "Biopolymer hybrid electrodes for scalable electricity storage", MATER. HORIZ., vol. 3, no. 3, 1 January 2016 (2016-01-01) , pages 174-185, XP055468907, ISSN: 2051-6347, DOI: 10.1039/C5MH00261C
- SAMUEL LEGUIZAMON ET AL: "High charge-capacity polymer electrodes comprising alkali lignin from the Kraft process", JOURNAL OF MATERIALS CHEMISTRY A: MATERIALS FOR ENERGY AND SUSTAINABILITY, vol. 3, no. 21, 1 January 2015 (2015-01-01), pages 11330-11339, XP055468914, GB ISSN: 2050-7488, DOI: 10.1039/C5TA00481K

## Description

### Technical field of the invention

The invention relates to a method for producing particles comprising lignosulfonate and an electron conducting polymer as well as to particles comprising lignosulfonate and an electron conducting polymer. Further, the invention relates to a method for manufacturing a conductive sheet as well as to a conductive sheet. Yet further, the invention relates to the use of a conductive sheet and to a capacitor comprising a conductive sheet.

### Background of the invention

Composite materials comprising a conductive polymer and lignosulfonate are highly attractive because these materials offer a bio-based solution for energy storage. For example, EDOT monomers may be electro-polymerized together with lignosulfonate to form PEDOT polymer where the lignosulfonate acts as the counter ion.

One possible application for using such a composite material is by producing conductive paper. Conductive paper is a promising alternative in flexible electronic applications such as supercapacitors, solar cells and/or thermoelectrics. The conductivity and/or the energy storage properties may for example be achieved by using said composite material of a conductive polymer and lignosulfonate.

However, a problem with the current state of the art is up-scaling up the synthesis of the composite material comprising such a conductive polymer and lignosulfonate in order to realize a low-cost production of a conductive paper. Therefore, the is a need to improve the methods currently used within the art.

Films of conducting (bio)polymer (PEDOT:lignosulfonate) are known in the prior art from Ajjan, F. N., et al., Journal of Materials Chemistry A: Materials for Energy and Sustainability, 2016, 4, 1838-1847.

Conductive paper comprising a conducting polymer (PEDOT:PSS) and fibers comprising polysaccharide (cellulose) is known from Abdellah, M., et al., Advanced Science, 2016, 3, 1500305.

Particles comprising a conductive polymer and lignosulfonate are known from CN 102 516 784 A.

### Summary of the invention

It is an object of the present invention to improve the current state of the art and to mitigate at least some of the above mentioned problems. These and other objects are achieved by the methods, the devices, and the use according to the accompanying claims.

According to a first aspect of the invention, a method for producing particles is provided. The method comprises the steps of:
- providing a composition comprising:
   - lignosulfonate
   - fibers comprising polysaccharides, and
   - monomers and/or oligomers capable of forming an electron conducting polymer;
- polymerizing in said composition said monomers and/or oligomers capable of forming an electron conducting polymer to said electron conducting polymer, thereby forming particles, which particles comprise lignosulfonate, fibers comprising polysaccharides, and said electron conducting polymer.

The present invention is based on the realization that a composition comprising lignosulfonate and fibers comprising polysaccharides offers a medium in which the monomers and/or oligomers capable of forming an electron conducting polymer are dispersible. Hence, a composition comprising lignosulfonate and fibers comprising polysaccharides offers a medium in which the monomers and/or oligomers capable of forming an electron conducting polymer may polymerize. Further, the present invention is based on the realization that upon polymerization of said monomers and/or oligomers capable of forming an electron conducting polymer, particles are formed, which particles form a stable dispersion in said composition comprising lignosulfonate and fibers comprising polysaccharides. This may be due to that during polymerization, the particles comprising lignosulfonate, fibers comprising polysaccharides, and the electron conducting polymer may form a gel-like network together with fibers comprising polysaccharides comprised in the composition, but which are not present inside the particles. The fibers comprising polysaccharides in said composition, but not present inside the particles, may offer possible sites for hydrogen bonding which facilitates the dispersion of the gel-like network. The gel-like network makes it possible to form larger particles before the particles may precipitate than what had been possible without fibers comprising polysaccharides in the composition.

Lignosulfonate refers to sulfonated lignin and may comprise a variety of water-soluble polyelectrolyte polymers. In acid sulfite pulping, lignosulfonate may be a byproduct. Lignosulfonate may also be obtained by sulfonation of lignin achieved from alkaline pulping.

Fibers comprising polysaccharides refer to a plurality of fibers which may originate from a natural source, e.g. a tree or another type of plant. Fibers comprising polysaccharides may for example be fibers comprising structural polysaccharides, e.g. cellulose, arabinoxylans, chitin or pectin. Alternatively, the fibers comprising polysaccharides may be fibers comprising storage polysaccharides, e.g. starch or glycogen.

Fibers comprising polysaccharides may comprise cellulose fibers, preferably cellulose pulp, such as papermaking pulp, nanofibrillated cellulose (NFC) or microfibrillated cellulose (MFC). The use of cellulose fibers, such as cellulose pulp, NFC or MFC, may provide a uniform dispersion of particles without precipitation and/or with a high conductivity, suitable for the manufacturing of conductive paper.

The cellulose fibers may have a diameter within the range of 10 nm to 100 nm, or within the range of 10 nm to 50 nm. Further, the cellulose fiber may have a length within the range of 100 nm to 5000 nm, or within the range of 300 nm to 2000 nm.

It should be understood that oligomers in the context of this invention refer for example to dimers or trimers, such as dimers or trimers of analine, thiophene, pyrrole, phenylenevinylene and/or derivatives or mixtures thereof. It should be understood that monomers and oligomers may collectively be referred to as prepolymers.

The electron conducting polymer may be any conductive polymer or derivative or combination thereof, including but not limited to polyaniline, polythiophene, polypyrrole, polyphenylenevinylene and/or derivatives or combinations thereof. Hence, the monomers and/or oligomers capable of forming an electron conducting polymer may for example be monomers and/or oligomers of analine, thiophene, pyrrole, phenylenevinylene and/or derivatives or combinations thereof.

The conductivity of the electron conducting polymer may be at least 10⁻⁵ S/cm, or at least 10⁻³ S/cm, or at least 10⁻¹ S/cm, or at least 1 S/cm, or at least 10 S/cm, or at least 100 S/cm.

The electron conducting polymer may be poly(3,4-ethylenedioxythiophene) (PEDOT) and the monomers and/or oligomers capable of forming an electron conducting polymer may for example be monomers and/or oligomers of 3,4-ethylenedioxythiophene (EDOT).

The method may further comprise a step of:
- providing a catalyst and/or an initiator to initiate to said composition, which catalyst catalyses and/or initiator initiates said step of polymerizing said monomers and/or oligomers capable of forming an electron conducting polymer.

The catalyst and the initiator may be the same compound. Stated differently, one compound may function both as a catalyst and as an initiator for the polymerization reaction. For example, an iron(III)-salt, e.g. iron(III)chloride (FeCl₃), Fe₂(SO₄)₃, or an iron(II)-salt, e.g. FeSO₄, may be added, wherein Fe³⁺ may function both as a catalyst and an initiator for the polymerization as described herein. Upon initiation of the polymerization of said monomers and/or oligomers capable of forming an electron conducting polymer, Fe³⁺ is reduced to Fe²⁺.

Peroxydisulfate may be provided to the composition. For example, peroxydisulfate having monovalent cations such as ammonium, sodium or potassium may be provided to the composition. In the following, provision of peroxydisulfate to the composition will be exemplified with ammonium peroxydisulfate ((NH₄)₂S₂O₈). Stated differently, the method may further comprise a step of providing (NH₄)₂S₂O₈ to said composition. (NH₄)₂S₂O₈ is a strong oxidant which may be latent until the decomposition of it is triggered, e.g. by the reduction of Fe³⁺ to Fe²⁺. When triggered, (NH₄)₂S₂O₈ oxidizes Fe²⁺ back to Fe³⁺ upon which oxidation the (NH₄)₂S₂O₈ is reduced to ammonium sulfate ((NH₄)₂SO₄). Stated differently, Fe²⁺ reduces (NH₄)₂S₂O₈ to (NH₄)₂SO₄ upon which reduction the Fe²⁺ is oxidized to Fe³⁺. Hence, (NH₄)₂S₂O₈ may be consumed during the production of particles.

The polymerization of monomers and/or oligomers may continue until the (NH₄)₂S₂O₈ is consumed or substantially consumed. Stated differently, the polymerization of the monomers and/or oligomers capable of forming an electron conducting polymer may continue until there are no more (NH₄)₂S₂O₈ which may oxidize Fe²⁺ back to Fe³⁺.

Alternatively, the polymerization may continue until the monomers and/or oligomers capable of forming an electron conducting polymer are consumed or substantially consumed. Stated differently, the polymerization continues until all or substantially all monomers and/or oligomers capable of forming an electron conducting polymer have become a part of said electron conducting polymer.

The (NH₄)₂S₂O₈ may be added to the composition prior to the iron(III)-salt. Upon addition of the iron(III)-salt to the composition, the polymerization may be initiated whereby the Fe³⁺ is reduced to Fe²⁺. Fe²⁺ then reduces (NH₄)₂S₂O₈ to ammonium sulfate ((NH₄)₂SO₄) upon which reduction Fe²⁺ is oxidized to Fe³⁺ which may continue to initiate the polymerization of the monomers and/or oligomers capable of forming an electron conducting polymer.

An iron(II)-salt, e.g. iron(II)sulfate (FeSO₄) may be provided to the composition prior to adding (NH₄)₂S₂O₈. The (NH₄)₂S₂O₈ may upon addition oxidize Fe²⁺ to Fe³⁺ upon which oxidation is reduced to (NH₄)₂SO₄. Fe³⁺ may subsequently initiate the polymerization of said monomers and/or oligomers capable of forming an electron conducting polymer.

The polymerization of the monomers and/or oligomers capable of forming an electron conducting polymer may be ultrasonic polymerization. The advantage of using ultrasonic polymerization is that the polymerization of monomers and/or oligomers may go faster.

The composition may be a liquid composition, preferably an aqueous composition. Additionally, or alternatively, the composition may comprise another solvent, e.g. an alcohol or DMSO.

The particles may have an average particle size larger than 10 µm, or preferably larger than 20 µm, or most preferably larger than 50 µm. The particles may be referred to as microparticles. Herein, when discussing the average particle size it should be understood that in average the particles may have at least one extension which is larger than 10 µm, or preferably larger than 20 µm, or most preferably larger than 50 µm. The average particle size may for example be determined by optical methods, e.g. by dynamic light scattering.

The particles may comprise a size distribution from 300 nm to 60 µm when measured in a dilute composition, e.g. a dilute dispersion. The size distribution may move to the larger side of the above mentioned size distribution when measured in compositions, e.g. dispersions, with higher concentrations.

According to a second aspect of the invention, particles comprising lignosulfonate, an electron conducting polymer and fibers comprising polysaccharides, are provided. The particles may be provided in a liquid composition, preferably the particles may be provided in an aqueous composition. Additionally, or alternatively, the composition may comprise an alcohol or DMSO.

The electron conducting polymer may for example be any of the electron conducting polymers mentioned in the connection to the first aspect of the invention. For example, the electron conducting polymer may be poly(3,4-ethylenedioxythiophene) (PEDOT).

Fibers comprising polysaccharides may refer to the fibers as referred to in connection to the first aspect of the invention. For example, fibers comprising polysaccharides may comprise cellulose fibers, preferably cellulose pulp, such as papermaking pulp, nanofibrillated cellulose (NFC) or microfibrillated cellulose (MFC).

The particles may have an average particle size larger than 10 µm, or preferably larger than 20 µm, or most preferably larger than 50 µm. Moreover, the particles may comprise a size distribution from 300 nm to 60 µm when measured in a dilute composition, e.g. in a dilute dispersion. The size distribution may move to the larger side of the above mentioned size distribution when measured in a composition, e.g. a dispersion, with a higher concentration.

The particles may be obtainable by the method according to the first aspect of the invention.

According to a third aspect of the invention, a method for manufacturing a conductive sheet comprising a conductive layer is provided. The method comprises the steps of:
- providing a composition comprising particles, which particles comprise lignosulfonate, fibers comprising polysaccharides, and an electron conducting polymer;
- subjecting said composition to filtration through a filter, thereby forming a conductive layer from said particles on top of said filter.

The composition may comprise a liquid phase and a solid phase, wherein the solid phase comprises the particles. The solid phase may be dispersed in the liquid phase. During filtration of the composition through the filter, the liquid phase and the solid phase may be separated from each other.

The solid phase of the composition may further comprise fibers comprising polysaccharides. Hence, the composition may comprise fibers comprising polysaccharides which are not present inside said particles. The fibers comprising polysaccharides which are not present in the particles may offer a medium in which the particles may form a stable dispersion. This may be due to that the particles comprising lignosulfonate, fibers comprising polysaccharides, and an electron conducting polymer may form a gel-like network together with fibers comprising polysaccharides in the composition, but which are not present in the particles. The fibers comprising polysaccharides in said composition, but not present inside of the particles, may offer possible sites for hydrogen bonding which facilitates the dispersion of the gel-like network.

The composition may be an aqueous composition. Additionally, or alternatively, the composition may comprise another solvent, e.g. an alcohol or DMSO.

The electron conducting polymer may for example be any of the electron conducting polymers mentioned in the connection to the first and second aspects of the invention. Further, fibers comprising polysaccharides may refer to the fibers as referred to in connection to the first and second aspects of the invention.

The particles may have an average particle size larger than 10 µm, or preferably larger than 20 µm, or most preferably larger than 50 µm. Moreover, the particles may comprise a size distribution from 300 nm to 60 µm when measured in a dilute composition, e.g. in a dilute dispersion. The size distribution may move to the larger side of the above mentioned size distribution when measured in a composition, e.g. a dispersion, with a higher concentration.

The particles may be particles according to the second aspect of the invention. Hence, the particles may for example be particles produced according to the first aspect of the invention.

The filter may have a mesh size of 5 to 1000 µm, or 10 to 100 µm and/or the filter may be a wire of paper making machine. Hence, the conductive layer may be manufactured in a paper making process.

The conductive layer may be a self-standing layer, e.g. it may be a self-supporting sheet. Stated differently, said conductive layer may be a free-standing layer, e.g. it may be a free-standing sheet. With "self-supporting" or "free-standing" is referred to that the conductive layer may be mainained without any support.

The particles may be a first type of particles and the composition may further comprise a second type of particles comprising an electron conducting material, which second type of particles has a different conductivity than said first type of particles. For example, the second type of particles may have a higher conductivity than the first type of particles. Additionally, or alternatively, the second type of particles may have an average particle size different from the first type of particles, e.g. the second type of particles may be larger than the first type of particles in at least one extension.

The electron conducting material may for example be a carbon based material e.g. carbon nanotubes or carbon fiber. Additionally, or alternatively, the electron material of said second type of particles may be an electron conducting polymer. The electron conducting polymer of the second type of particles may be the same or may be a different electron conducting polymer as compared to the electron conducting polymer of the first type of particles. The electron conducting polymer comprised in said second type of particles may for example be polyaniline, polythiophene, polypyrrole, polyphenylenevinylene and/or derivatives or combinations thereof. Preferably, the electron conducting polymer of said second type of particles may be PEDOT:PSS, or polyaniline, or polypyrrole.

The composition may be a first composition and the conductive layer may be a first conductive layer. The method may further comprise:
- providing a second composition comprising particles comprising an electron conducting material;
- subjecting said second composition to filtration through said filter, thereby forming a second conductive layer from particles of said second composition adjacent said first conductive layer.

The particles of said second composition may be of the first type, of the second type and/or of a third type of particles, preferably of a third type of particles, most preferably said third type of particles having a different conductivity than the first type of particles and the second type of particles. For example, the third type of particles may have a higher conductivity than the first type of particles and the second type of particles.

Additionally, or alternatively, the third type of particles may have an average particle size different from the first type of particles and/or said second type of particles, e.g. the third type of particles may be larger than the first type of particles and the second type of particles in at least one extension.

The third type of particles may comprise an electron conducting material, e.g. a carbon based material such as carbon nanotubes or carbon fiber, which may be the same or different as the electron conducting material of the second type of particles. Alternatively, the third type of particles may comprise an electron conducting polymer, which may be the same or a different electron conducting polymer as comprised in said first type of particles. The electron conducting polymer comprised in said third type of particles may for example be polyaniline, polythiophene, polypyrrole, polyphenylenevinylene and/or derivatives or combinations thereof. Preferably, the electron conducting polymer of said second type of particles may be PEDOT:PSS, or polyaniline, or polypyrrole.

The first composition may be subjected to filtration through said filter prior to said second composition. Alternatively, the second composition is subjected to filtration through said filter prior to the first composition.

The conductive layer may have a capacitance in the range of 100 to 500 F/g, or preferably in the range of 150 to 300 F/g, or most preferably in the range of 200 to 300 F/g.

The conductive layer may have a conductivity of at least 0.001 S/cm, or at least 0.01 S/cm, or at least 0.1 S/cm, or at least 1 S/cm, or at least 10 S/cm.

The method for manufacturing a conductive sheet may further comprise a step of:
- arranging said conductive layer on top of a layer comprising a conductive material; or
- arranging said first and said second conductive layer on top of a layer comprising a conductive material. The combination of said conductive layer and the another layer may have a higher conductivity than the conductive layer on its own. The conductive material of said another layer may for example be a carbon based material, e.g. carbon nanotubes or carbon fibers. Hence, said second sheet may comprise a carbon based material. The layer comprising a conductive material may e.g. be a third conductive layer of said conductive sheet.

According to a forth aspect of the invention, a sheet comprising a conductive layer is provided. Said conductive layer comprises particles, said particles comprising lignosulfonate, fibers comprising polysaccharides, and an electron conducting polymer.

The conductive layer may be a first conductive layer. The conductive sheet may further comprise a second conducting layer. Further, the conductive material may comprise a third conductive layer. Stated differently, the conductive sheet may comprise one or several conductive layers.

The conductive sheet may be obtainable according to the third aspect of the invention. Further, the particles may be particles according to the second aspect of the invention. Yet further, the particles may be obtainable according to the method of the first aspect of the invention.

The conductive layer may have a capacitance as defined in relation the third aspect of the invention. Hence, the conductive layer may have a capacitance in the range of 100 to 500 F/g, or preferably in the range of 150 to 300 F/g, or most preferably in the range of 200 to 300 F/g. Further, the conductive layer may have a conductivity as defined by the third aspect of the invention. Hence, the conductive layer may have a conductivity of at least 0.001 S/cm, or at least 0.01 S/cm, or at least 0.1 S/cm, or at least 1 S/cm, or at least 10 S/cm.

The electron conducting polymer may for example be any of the electron conducting polymers mentioned in the connection to the first, second or third aspects of the invention. Further, fibers comprising polysaccharides may refer to the fibers as referred to in connection to the first, second or the third aspects of the invention.

The particles may have an average particle size larger than 10 µm, or preferably larger than 20 µm, or most preferably larger than 50 µm. Moreover, the particles may comprise a size distribution from 300 nm to 60 µm when measured in a dilute composition, e.g. in a dilute dispersion. The size distribution may move to the larger side of the above mentioned size distribution when measured in a composition, e.g. a dispersion, with a higher concentration.

The conductive layer or the conductive sheet may be used in a variety of applications. The conductive layer or the conductive sheet may for example function as an electrode. The conductive layer, the conductive sheet or the electrode may be used in the field of thermoelectric devices, fuel cells, batteries, supercapacitors, sensors, water softening, water desalination, or removal of cations, such as heavy metal ions, from water.

According to a fifth aspect of the invention use of a conductive layer according to the fourth aspect is provided. The conductive layer may be used as an electrode. The conductive layer may for example be used as an electrode for a capacitor.

According to a sixth aspect of the invention a capacitor comprising a conductive layer according to the fourth aspect is provided.

### Brief description of the drawings

The above objects, as well as additional objects, features and advantages of the present invention, will be more fully appreciated by reference to the following illustrative and non-limiting detailed description of embodiments of the present invention, when taken in conjunction with the accompanying drawings, wherein:
Fig. 1 shows a schematic view of a method for producing particles in accordance with at least one example embodiment of the invention.
Fig. 2a shows molecular structures of PEDOT, NFC and lignosulfonate in accordance with at least one example embodiment of the invention. Fig. 2b shows a polymerization of EDOT in presence of lignosulfonate in accordance with at least one example embodiment of the invention.
Fig. 3 shows a schematic view of a particle in accordance with at least one example embodiment of the invention.
Fig. 4 shows a schematic view of a method for manufacturing a conductive layer in accordance with at least one example embodiment of the invention.
Fig. 5 shows a conductive sheet in accordance with at least one example embodiment of the invention.
Fig. 6 shows a graph comprising UV-vis spectra of (a) a dispersion of lignosulfonate and (b) a dispersion comprising particles comprising PEDOT, lignosulfonate and nanofibrillated cellulose (NFC) in accordance with at least one example embodiment of the invention.
Fig. 7 shows a graph comprising galvanostatic chronopotentiometry discharging curves at different currents for an electrode comprising particles of PEDOT, lignosulfonate and nanofibrillated cellulose (NFC) in accordance with at least one example embodiment of the invention.
Figs. 8a, 8b show graphs comprising cyclic voltammetry curves for an electrode comprising particles of PEDOT, lignosulfonate and nanofibrillated cellulose (NFC) at (a) different scan rates and (b) at a scan rate of 0.1 mV/s in accordance with at least one example embodiment of the invention.
Figs. 9a, 9b, 9c shows the conductivity and capacitance dependency of the starting ration of (a) EDOT, (b) lignosulfonate and (c) NFC.

### Detailed description of the drawings

In the present detailed description, embodiments of the present invention will be discussed with reference to the accompanying figures. It should be noted that this by no means limits the scope of the invention, which is also applicable in other circumstances encompassed by the scope of the claims, than the embodiments shown in the appended drawings. Further, that specific features are mentioned in connection to an embodiment of the invention does not mean that those features cannot be used to an advantage together with other embodiments of the invention.

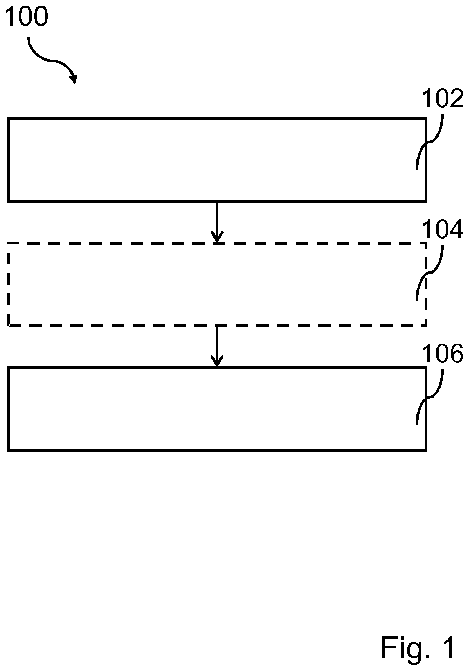

Fig. 1 shows a schematic view of a method 100 for producing particles. The method as shown in Fig. 1 comprises a first step of providing a composition 102, which composition comprises (i) lignosulfonate, (ii) fibers comprising polysaccharides and (iii) monomers and/or oligomers capable of forming an electron conducting polymer. Further, the method 100 comprises a step of polymerizing 106 in said composition said monomers and/or oligomers capable of forming an electron conducting polymer to said electron conducting polymer. During the step of polymerizing 106 in said composition said monomers and/or oligomers capable of forming an electron conducting polymer to said electron conducting polymer, particles comprising lignosulfonate, fibers comprising polysaccharides, and said electron conducting polymer are formed.

The composition may for example be an aqueous composition. Further, the fibers comprising polysaccharides may for example be cellulose based fibers, e.g. cellulose pulp, such as papermaking pulp, microfibrillated cellulose (MFC) or nanofibrillated cellulose (NFC). Yet further, the electron conducting polymer may poly(3,4-ethylenedioxythiophene) (PEDOT). Hence, the monomers and/or oligomers capable of forming an electron conducting polymer may be monomers and/or oligomers of 3,4 -ethylenedioxythiophene (EDOT), e.g. it may be monomers, dimers and/or trimers of EDOT.

The particles may have an average particle size larger than 10 µm, or larger than 20 µm, or larger than 50 µm. Moreover, the particles may comprise a size distribution from 300 nm to 60 µm when measured in a dilute composition, e.g. in a dilute dispersion. The size distribution may move to the larger side of the above mentioned size distribution when measured in a composition, e.g. a dispersion, with a higher concentration.

The method 100 may further comprise an optional step of providing a catalyst and/or initiator 104 to initiate the step of polymerizing 106 in said composition said monomers and/or oligomers capable of forming an electron conducting polymer to said electron conducting polymer. In this step of providing a catalyst and/or initiator 104, FeCl₃ may be added. FeCl₃ may work both as a catalyst and an initiator.

In addition, ammonium peroxydisulfate ((NH₄)₂S₂O₈) may be provided to the composition. Stated differently, the method may further comprise a step of providing (NH₄)₂S₂O₈ to said composition (not shown in fig. 1). (NH₄)₂S₂O₈ is a strong oxidant which may be latent until the decomposition of it is triggered, e.g. by the reduction of Fe³⁺ to Fe²⁺. When triggered, (NH₄)₂S₂O₈ oxidizes Fe²⁺ back to Fe³⁺ upon which oxidation the (NH₄)₂S₂O₈ is reduced to ammonium sulfate ((NH₄)₂SO₄). Stated differently, Fe²⁺ reduces (NH₄)₂S₂O₈ to (NH₄)₂SO₄ upon which reduction the Fe²⁺ is oxidized to Fe³⁺. Hence, (NH₄)₂S₂O₈ may be consumed during the production of particles.

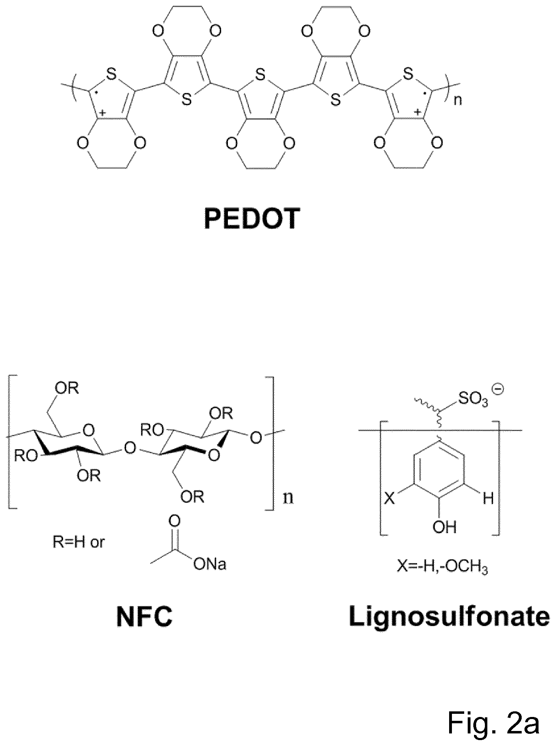

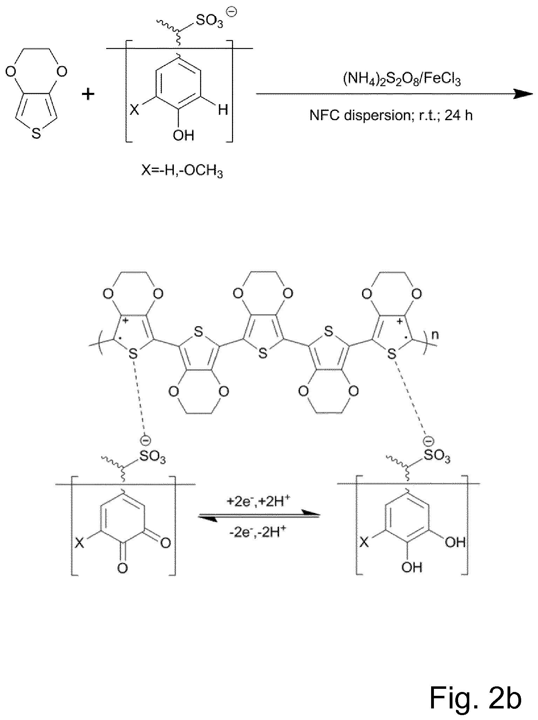

Fig. 2a shows the molecular structures of PEDOT, NFC and lignosulfonate. Fig. 2b shows the polymerization of EDOT in presence of lignosulfonate. Lignosulfonate may act as a counter ion to form the new composite LS-PEDOT.

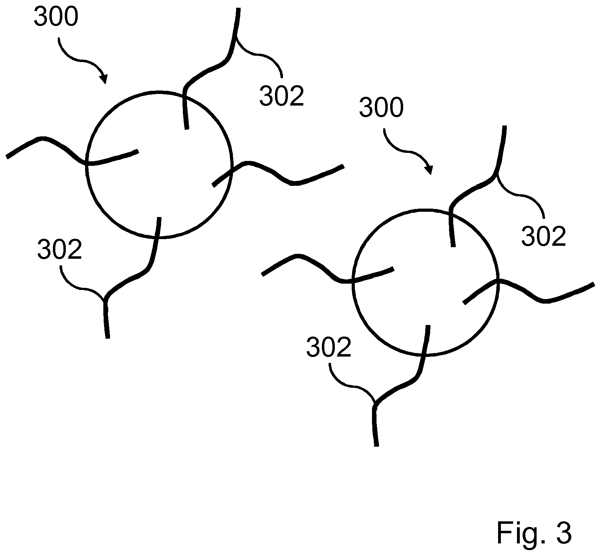

Fig. 3 shows a schematic view of particles 300. Each particle comprises lignosulfonate, fibers comprising polysaccharides 302, and an electron conducting polymer. The particles may for example be produced according to the method 100 as presented in relation to Fig. 1.

The particles 300 may have an average particle size larger than 10 µm, or larger than 20 µm, or larger than 50 µm. Moreover, the particles 300 may comprise a size distribution from 300 nm to 60 µm when measured in a dilute composition, e.g. in a dilute dispersion. The size distribution may move to the larger side of the above mentioned size distribution when measured in a composition, e.g. a dispersion, with a higher concentration.

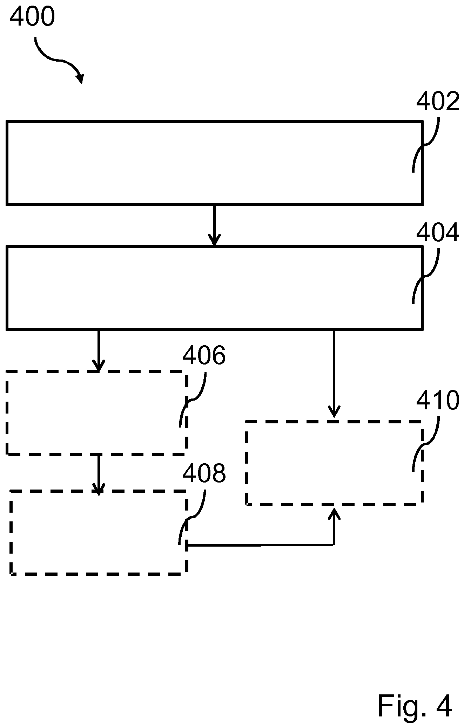

Fig. 4 shows a schematic view of a method 400 for manufacturing a conductive sheet comprising a conductive layer. The method 400 comprises the step of providing a composition 402, which composition may be a first composition. The composition comprises particles, which particles comprises lignosulfonate, fibers comprising polysaccharides, and an electron conducting polymer. The method further comprises the step of subjecting said composition to filtration 404 through a filter. The particles may upon the step subjecting said composition to filtration 404 form a conductive layer on top of the filter.

The composition may further comprise fibers comprising polysaccharides which are not present inside of the particles. Said fibers comprising polysaccharides not present inside of the particles may together with the particles form said conductive layer. The particles may for example be the particles 300 as shown in Fig. 3. Yet further, the particles may be a first type of particles and the composition may further comprise a second type of particles. The second type of particles may have a different conductivity and/or a different size than the first type of particles.

The filter in the filter arrangement may have a pore-size of 5 to 1000 µm, or 10 to 100 µm. Further, it may be a web of a paper making machine.

The method may further comprise to optional steps 406, 408, 410 marked with dashed boxes in Fig. 4. The method may for example comprise a step of providing a second composition 406. The second composition may comprise particles of said first type, of said second type or of a third type of particles. The third type of particles may have a different conductivity and/or a different size than the first type of particles and/or than said second type of particles. Subsequently, the method comprises a step of subjecting said second composition to filtration 408 through said filter.

Further, the method may comprise a step of arranging said conductive layer 410 on top of layer comprising a conductive material. The layer comprising a conductive material may be a third conductive layer. The step of arranging said conductive layer 410 on top of layer comprising a conductive material may follow the step of subjecting said composition to filtration 404 or it may follow the step of subjecting said second composition to filtration 408.

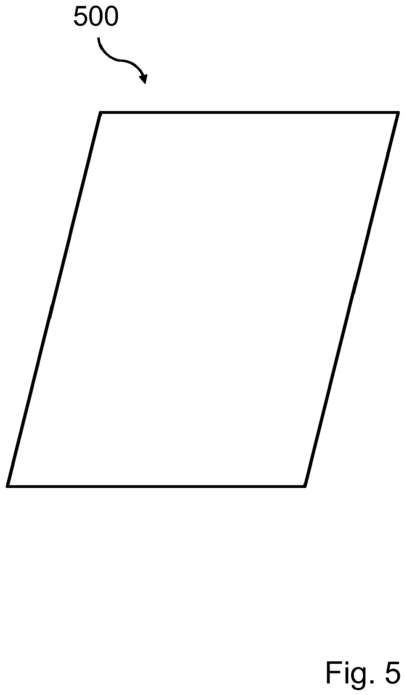

Fig. 5 shows a conductive sheet 500. The conductive sheet comprises a first conductive layer comprising particles comprising lignosulfonate, fibers comprising polysaccharides, and an electron conductive polymer. The conductive sheet 500 may further comprise fibers comprising polysaccharides which fibers are not present inside of the particles. The conductive sheet 500 may for example be manufactured by the method 400 of Fig. 4. Further, the particles comprised in conductive sheet 500 may be particles 300 of Fig. 3.

The conductive sheet 500 may for example be a conductive paper. Further, the conductive layer may be used as an electrode, in e.g. a capacitor.

In the following, non-limiting examples of how the method for producing particles may be conducted are presented. In other words, the following, non-limiting examples describe how the method may be used. Further, in the following, non-limiting examples, results of the method are presented. It should be understood that the man skilled in the art would realize that there are a number of modifications which may be possible without departing from the scope of the invention.

### Examples

### Chemical synthesis of PEDOT-LS-NFC particles

In order to provide a composition comprising lignosulfonate (LS), nanofibrillated cellulose (NFC), and monomers of EDOT the following steps were performed:
1) 1 wt% NFC aqueous dispersion and 2 wt% lignosulfonates aqueous dispersion were mixed with a fixed weight ratio using a T10 basic ULTRA-TURRAX (Laboratory Mixers) for 4 minutes.
2) The mixed dispersion was stirred at room temperature for 4h to remove the bubbles inside of said dispersions.
3) Na₂S₂O₈ was added and the stirring was continued for another 1h.
4) EDOT was added.

The weight ratio of each component in EDOT:LS:NFC was varied from 1 to 3 and the molar ratio of Na₂S₂O₈ to EDOT was fixed to 2.5:1. To the composition a catalytic amount of FeCl₃ was added to initiate the polymerization reaction. The polymerization was carried out under magnetic stirring at room temperature for 24 h, and the reaction product was a stable blue-black dispersion of PEDOT-LS-NFC particles.

The dispersion of PEDOT-LS-NFC particles was filtered through a wire mesh used for paper making to remove the water of the composition. The wire mesh size is 10 µm. During filtration a free-standing paper-like conductive layer was formed.

### Characterization

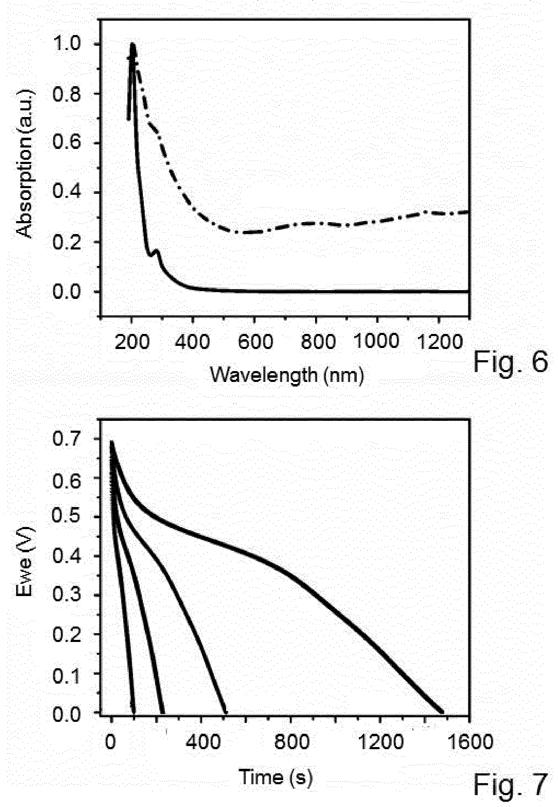

Fig. 6 shows the UV-vis absorption spectra of (i) a dispersion comprising lignosulfonate (solid line) and (ii) a dispersion of PEDOT-LS-NFC particles (dash-dotted line) which was produced according to the example above. The absorption spectra were acquired with a UV-vis Spectrophotometer (Lambda 900, PerkinElmer instruments).

The UV-vis absorption spectrum of a dispersion comprising lignsulfonate (solid line) display the typical absorption peaks for lignosulfonate (i.e. the peaks at 203 nm and 281 nm). Further, the UV-vis absorption spectrum of a composition comprising the particles comprising lignosulfonate, PEDOT and NFC displays typical peaks both for lignosulfonate (i.e. peaks at 203 nm and 281 nm) and for doped, i.e. oxidized, PEDOT (i.e. the broad peak around 800 nm). Hence, the UV-vis absorption spectra confirms that EDOT has been polymerized in the presence of lignosulfonate, obtaining particles comprising PEDOT which is here stabilized by lignosulfonate and NFC.

Further, a conductive sheet comprising a conductive layer manufactured according to the example above, which conductive layer comprises PEDOT-LS-NFC (PLN) particles was electrochemically characterized. A three-electrode configuration was used for the electrochemical measurements where carbon fibers were used as current collector and were stuck between two PLN layers by carbon paste. All the measurements were conducted on a Biologic potentiostat, in 0.1 M HClO₄ aqueous solution with Ag/AgCl as reference electrode and Pt mesh as counter electrode.

Fig. 7 shows galvanostatic chronopotentiometry discharging curves at currents for an electrode comprising a conductive sheet manufactured according to the example above. The conductive sheet comprises a conductive layer, which comprises PEDOT-LS-NFC particles. Galvanostatic charge-discharge measurements were made in the potential range 0 V to 0.7 V with different current (from left to right in Fig. 7: 2 mA, 1 mA, 500 µA and 200 µA). The plateau region between 0.5 V and 0.35 V denotes the increase of capacitance because of the faradaic reactions of the quinone group in lignosulfonate.

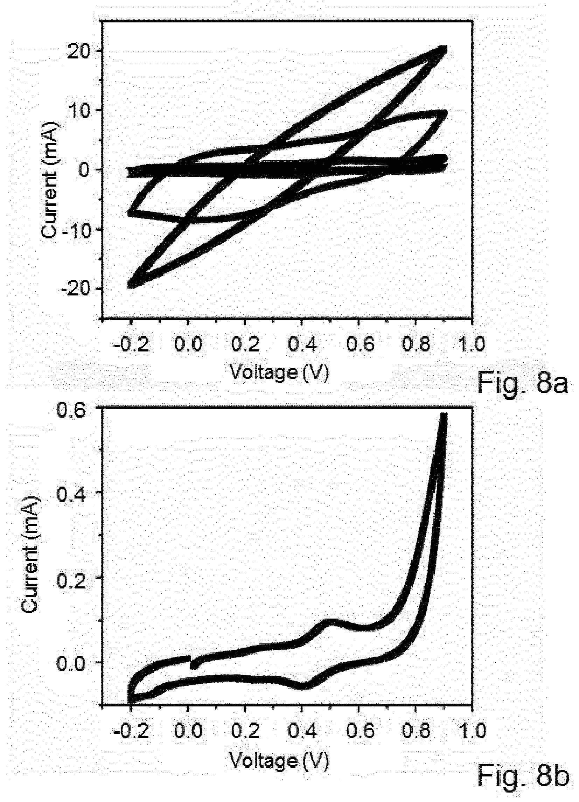

Figs. 8a, 8b show cyclic voltammetry (CV) curves of a conductive sheet comprising a conductive layer, which conductive layer comprises PEDOT-LS-NFC particles. Cyclic voltammetry was performed in the potential range of -0.2 V to 0.9 V. Fig. 8a shows CV-curves at different scanning rates, starting from the top 100 mV/s, 10 mV/s, 1 mV/s, and 0.1 mV/s. Fig. 8b shows the CV-curve for a scanning rate of 0.1 mV/s. This curve shows an oxidative peak at approx. 0.5 V corresponding to the quinone group of lignosulfonate.

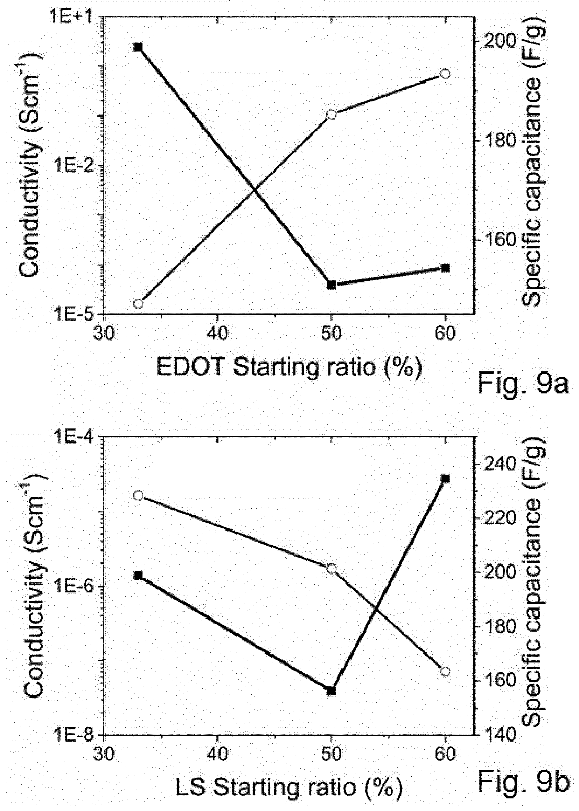

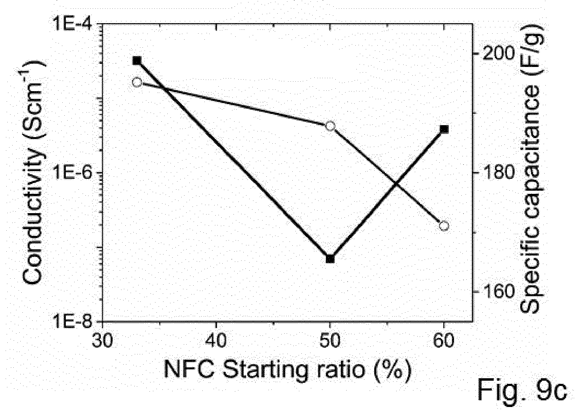

Figs. 9a, 9b, 9c show how the conductivity (squares) and the capacitance (circles) of a conductive layer depends on the mass ratio of EDOT:lignosulfonate:NFC in the composition prior to polymerization. A mass ratio of 33 % corresponds to a 1:1:1 ratio between EDOT:lignosulfonate:NFC. The ratio was altered by increasing only one of the components by weight. The in-plane electronic conductivity of the PLN composite films was measured using by a four-probe method. The capacitor was charged at 0.7 V and discharged at 0 V over 1000 cycles to explore its cycling properties. The weight being used in the calculation of capacitance is referring to the weight of only PEDOT and LS without NFC in the electrode.

Fig. 9a shows the dependencies when varying the weight of EDOT such that the ratio EDOT:lignosulfonate:NFC is altered from 1:1:1 to 2:1:1 and 3:1:1. It is seen that when increasing the amount of EDOT in the composition prior to polymerization, the conductivity of the conductive layer increased whereas the specific capacitance decreased.

Fig. 9b shows the dependencies when varying the weight of lignosulfonate such that the ratio EDOT:lignosulfonate:NFC is altered from 1:1:1 to 1:2:1 and 1:3:1. It is seen that when increasing the amount if lignosulfonate in the composition prior to polymerization the conductivity decreased whereas the specific capacitance initially decreases but increases for the ration 1:3:1. Also it can be seen that the conductivity may increase several orders with a relatively small change of capacitance.

Fig. 9c shows the dependencies when varying the weight of NFC such that the ratio EDOT:lignosulfonate:NFC is altered from 1:1:1 to 1:1:2 and 1:1:3. It is seen that when increasing the relative amount of NFC in the composition prior to polymerization, the conductivity decreases whereas the specific capacitance initially decreases and then increases again.

## Claims

1. A method for producing particles, said method comprising the steps of:
- providing a composition comprising:
- lignosulfonate,
- fibers comprising polysaccharides, and
- monomers and/or oligomers capable of forming an electron conducting polymer; and
- polymerizing in said composition said monomers and/or oligomers capable of forming an electron conducting polymer to said electron conducting polymer, thereby forming particles, which particles comprise lignosulfonate, fibers comprising polysaccharides, and said electron conducting polymer.

2. The method according to claim 1, wherein said composition is a liquid composition, preferably an aqueous composition.

3. The method according to claim 1 or 2, wherein said fibers comprising polysaccharides comprise cellulose fibers, preferably cellulose pulp, nanofibrillated cellulose and/or microfibrillated cellulose.

4. The method according any one of the preceding claims, wherein the particles have an average particle size larger than 10 µm, or preferably larger than 20 µm, or most preferably larger than 50 µm.

5. Particles comprising lignosulfonate, an electron conducting polymer and fibers comprising polysaccharides.

6. The particles according claim 5, wherein said particles are obtainable by the method according to any one of claims 1 to 4.

7. A method for manufacturing a conductive sheet comprising a conductive layer, said method comprising the steps of:
- providing a composition comprising particles, which particles comprises lignosulfonate, fibers comprising polysaccharides and an electron conducting polymer;
- subjecting said composition to filtration through a filter, thereby forming a conductive layer from said particles on said filter.

8. The method for manufacturing a conductive sheet according to claim 7, wherein said particles are particles according to claim 5 or 6.

9. The method for manufacturing a conductive sheet according to claim 7 or 8, wherein said filter has a mesh-size of 5 to 1000 µm, or 10 to 100 µm; and/or
wherein said filter is a wire of a paper making machine.

10. The method for manufacturing a conductive sheet according to any one of claims 7 to 9, wherein said particles are a first type of particles and said composition further comprises a second type of particles comprising an electron conducting material, which second type of particles has a different conductivity than said first type of particles, thereby forming a conductive layer from said first and said second type of particles on said filter.

11. The method for manufacturing a conductive sheet according to any one of claims 7 to 10, wherein said composition is a first composition and said conductive layer is a first conductive layer; and
wherein said method further comprises:
- providing a second composition comprising particles comprising an electron conducting material;
- subjecting said second composition to filtration through said filter, thereby forming a second conductive layer from said particles of said second composition adjacent said first conductive layer.

12. A conductive sheet comprising a conductive layer, which conductive layer comprises particles, said particles comprising lignosulfonate, fibers comprising polysaccharides, and an electron conducting polymer.

13. The conductive sheet according to claim 12, wherein said conductive layer is obtainable by the method according to any one of claims 7 to 11.

14. Use of a conductive sheet according to claim 12 or 13 as an electrode.

15. A capacitor comprising a conductive sheet according claim 12 or 13.

## Patentansprüche

1. Verfahren zum Bereitstellen von Partikeln, wobei das Verfahren die Schritte umfasst:
- Bereitstellen einer Zusammensetzung, umfassend:
- Lignosulfonat,
- Fasern, umfassend Polysaccharide, und
- Monomere und/oder Oligomere, die ein elektronenleitendes Polymer bilden können; und
- Polymerisieren in der Zusammensetzung der Monomere und/oder Oligomere, die ein elektronenleitendes Polymer bilden können, zum dem elektronenleitenden Polymer, wodurch Partikel gebildet werden, wobei die Partikel Lignosulfonat, Polysaccharide umfassende Fasern und das elektronenleitende Polymer umfassen.

2. Verfahren nach Anspruch 1, wobei die Zusammensetzung eine flüssige Zusammensetzung ist, bevorzugt eine wässrige Zusammensetzung.

3. Verfahren nach Anspruch 1 oder 2, wobei die Polysaccharide umfassenden Fasern Cellulosefasern, bevorzugt Cellulosepulpe, nanofibrillierte Cellulose und/oder mikrofibrillierte Cellulose umfassen.

4. Verfahren nach einem der vorhergehenden Ansprüche, wobei die Partikel eine mittlere Partikelgröße größer als 10 µm oder bevorzugt größer als 20 µm oder besonders bevorzugt größer als 50 µm aufweisen.

5. Partikel, umfassend Lignosulfonat, ein elektronenleitendes Polymer und Polysaccharide umfassende Fasern.

6. Partikel nach Anspruch 5, wobei die Partikel durch das Verfahren nach einem der Ansprüche 1 bis 4 erhalten werden können.

7. Verfahren zum Herstellen eines leitfähigen Blattes, umfassend eine leitfähige Schicht, wobei das Verfahren die folgenden Schritte umfasst:
- Bereitstellen einer Partikel umfassenden Zusammensetzung, wobei die Partikel Lignosulfonat, Polysaccharide umfassende Fasern und ein elektronenleitendes Polymer umfassen;
- Unterziehen der Zusammensetzung einer Filtrierung durch einen Filter, wobei auf dem Filter eine leitfähige Schicht aus den Partikeln gebildet wird.

8. Verfahren zum Herstellen eines leitfähigen Blattes nach Anspruch 7, wobei die Partikel Partikel nach Anspruch 5 oder 6 sind.

9. Verfahren zum Herstellen eines leitfähigen Blattes nach Anspruch 7 oder 8, wobei der Filter eine Maschengröße von 5 bis 1000 µm oder 10 bis 100 µm aufweist; und/oder
wobei der Filter ein Sieb einer Papiermaschine ist.

10. Verfahren zum Herstellen eines leitfähigen Blattes nach einem der Ansprüche 7 bis 9, wobei die Partikel eine erste Art von Partikeln sind und die Zusammensetzung weiterhin eine zweite Art von Partikeln, umfassend ein elektronenleitendes Material, umfasst wobei die zweite Art von Partikeln eine andere Leitfähigkeit als die erste Art von Partikeln aufweist, wodurch aus der ersten und zweiten Art von Partikeln auf dem Filter eine leitfähige Schicht gebildet wird.

11. Verfahren zum Herstellen eines leitfähigen Blattes nach einem der Ansprüche 7 bis 10, wobei die Zusammensetzung eine erste Zusammensetzung ist und die leitfähige Schicht eine erste leitfähige Schicht ist; und
wobei das Verfahren weiterhin umfasst:
- Bereitstellen einer zweiten Zusammensetzung, umfassend ein elektronenleitendes Material umfassende Partikel;
- Unterziehen der zweiten Zusammensetzung einer Filtrierung durch den Filter, wodurch aus den Partikeln der zweiten Zusammensetzung neben der ersten leitfähigen Schicht eine zweite leitfähige Schicht gebildet wird.

12. Leitfähiges Blatt, umfassend eine leitfähige Schicht, wobei die leitfähige Schicht Partikel umfasst, wobei die Partikel Lignosulfonat, Polysaccharide umfassende Fasern und ein elektronenleitendes Polymer umfassen.

13. Leitfähiges Blatt nach Anspruch 12, wobei die leitfähige Schicht durch das Verfahren nach einem der Ansprüche 7 bis 11 erhalten werden kann.

14. Verwendung eines leitfähigen Blattes nach Anspruch 12 oder 13 als eine Elektrode.

15. Kondensator, umfassend ein leitfähiges Blatt nach Anspruch 12 oder 13.

## Revendications

1. Procédé de production de particules, ledit procédé comprenant les étapes de :
- obtention d'une composition comprenant :
- du lignosulfonate,
- des fibres comprenant des polysaccharides, et
- des monomères et/ou oligomères susceptibles de former un polymère conducteur d'électrons ; et
- polymérisation dans ladite composition desdits monomères et/ou oligomères susceptibles de former un polymère conducteur d'électrons en ledit polymère conducteur d'électrons, formant ainsi des particules, lesquelles particules comprennent du lignosulfonate, des fibres comprenant des polysaccharides, et ledit polymère conducteur d'électrons.

2. Procédé selon la revendication 1, dans lequel ladite composition est une composition liquide, de préférence une composition aqueuse.

3. Procédé selon la revendication 1 ou 2, dans lequel lesdites fibres comprenant des polysaccharides comprennent des fibres cellulosiques, de préférence de la pâte cellulosique, de la cellulose nanofibrillée et/ou de la cellulose microfibrillée.

4. Procédé selon l'une quelconque des revendications précédentes, dans lequel les particules ont une taille moyenne de particules supérieure à 10 µm, ou de préférence supérieure à 20 µm, ou le plus préférablement supérieure à 50 µm.

5. Particules comprenant du lignosulfonate, un polymère conducteur d'électrons et des fibres comprenant des polysaccharides.

6. Particules selon la revendication 5, lesdites particules pouvant être obtenues par le procédé selon l'une quelconque des revendications 1 à 4.

7. Procédé de fabrication d'une feuille conductrice comprenant une couche conductrice, ledit procédé comprenant les étapes de :
- obtention d'une composition comprenant des particules, lesquelles particules comprennent du lignosulfonate, des fibres comprenant des polysaccharides et un polymère conducteur d'électrons ;
- soumission de ladite composition à une filtration à travers un filtre, formant ainsi une couche conductrice à partir desdites particules sur ledit filtre.

8. Procédé de fabrication d'une feuille conductrice selon la revendication 7, dans lequel lesdites particules sont des particules selon la revendication 5 ou 6.

9. Procédé de fabrication d'une feuille conductrice selon la revendication 7 ou 8, dans lequel ledit filtre a une ouverture de maille de 5 à 1000 µm, ou 10 à 100 µm ; et/ou
dans lequel ledit filtre est une toile d'une machine à papier.

10. Procédé de fabrication d'une feuille conductrice selon l'une quelconque des revendications 7 à 9, dans lequel lesdites particules sont un premier type de particules et ladite composition comprend en outre un deuxième type de particules comprenant un matériau conducteur d'électrons, lequel deuxième type de particules a une conductivité différente de celle dudit premier type de particules, formant ainsi une couche conductrice à partir dudit premier et dudit deuxième type de particules sur ledit filtre.

11. Procédé de fabrication d'une feuille conductrice selon l'une quelconque des revendications 7 à 10, dans lequel ladite composition est une première composition et ladite couche conductrice est une première couche conductrice ; et
ledit procédé comprenant en outre :
- l'obtention d'une deuxième composition comprenant des particules comprenant un matériau conducteur d'électrons ;
- la soumission de ladite deuxième composition à une filtration à travers ledit filtre, formant ainsi, à partir desdites particules de ladite deuxième composition, une deuxième couche conductrice adjacente à ladite première couche conductrice.

12. Feuille conductrice comprenant une couche conductrice, laquelle couche conductrice comprend des particules, lesdites particules comprenant du lignosulfonate, des fibres comprenant des polysaccharides, et un polymère conducteur d'électrons.

13. Feuille conductrice selon la revendication 12, dans laquelle ladite couche conductrice peut être obtenue par le procédé selon l'une quelconque des revendications 7 à 11.

14. Utilisation d'une feuille conductrice selon la revendication 12 ou 13 comme une électrode.

15. Condensateur comprenant une feuille conductrice selon la revendication 12 ou 13.
